# EUROPEAN PATENT APPLICATION

(11) **EP 4 564 513 A1**
(43) Date of publication of application: **04.06.2025**
(21) Application number: 23857595.5
(22) Date of filing: 28.07.2023
(51) Int. Cl.: H01M 10/0567, H01M 10/42, H01M 10/052

(54) **ELECTROLYTE FOR RECHARGEABLE LITHIUM BATTERY AND RECHARGEABLE LITHIUM BATTERY INCLUDING SAME**

(30) Priority: 25.08.2022 KR 20220107000; 19.07.2023 KR 20230093841
(71) Applicant: SK On Co., Ltd., Seoul 03161 (KR); SK innovation Co., Ltd., Seoul 03188 (KR)
(72) Inventor: SHIM, Yu Na, Daejeon 34124 (KR); LEE, Hong Won, Daejeon 34124 (KR)
(74) Representative: Prüfer & Partner mbB Patentanwälte · Rechtsanwälte
(86) International application number: PCT/KR2023/011071
(87) International publication number: WO 2024/043559

(57) **Abstract**

An electrolyte for a rechargeable lithium battery of exemplary embodiments includes: an organic solvent; a lithium salt; and a bisphosphate-based additive, thereby providing an electrolyte for a rechargeable lithium battery capable of imparting improved flame retardant characteristics and cell performance, for example, high-temperature storage characteristics and lifespan characteristics, and a rechargeable lithium battery including the same.

## Description

### [Technical Field]

The present disclosure relates to an electrolyte for a rechargeable lithium battery and a rechargeable lithium battery including the same. More specifically, the present disclosure relates to an electrolyte for a rechargeable lithium battery which includes a solvent and an electrolyte salt, and a rechargeable lithium battery including the same.

### [Background Art]

A rechargeable battery is a battery which can be repeatedly charged and discharged. With rapid progress of information and communication, and display industries, the rechargeable battery has been widely applied to various portable electronic telecommunication devices such as a camcorder, a mobile phone, a laptop computer as a power source thereof. Recently, a battery pack including the rechargeable battery has also been developed and applied to an eco-friendly automobile such as a hybrid vehicle as a power source thereof.

Examples of the rechargeable battery may include a rechargeable lithium battery, a nickel-cadmium battery, a nickel-hydrogen battery and the like. Among them, the rechargeable lithium battery has a high operating voltage and a high energy density per unit weight, and is advantageous in terms of a charging speed and light weight, such that development thereof has been proceeded in this regard.

For example, the rechargeable lithium battery may include: an electrode assembly including a cathode, an anode, and a separation membrane (separator); and an electrolyte in which the electrode assembly is impregnated. The rechargeable lithium battery may further include, for example, a pouch-shaped outer case in which the electrode assembly and the electrolyte are housed.

A rechargeable lithium battery having longer lifespan, high capacity, and operational stability is required as the application range thereof is expanded. Accordingly, a rechargeable lithium battery that provides uniform output and capacity even during repeated charging and discharging is preferable.

However, according to the repeated charging and discharging, the output and capacity may be decreased due to damage to the surface of the nickel-based lithium metal oxide used as a cathode active material, and a side reaction between the nickel-based lithium metal oxide and the electrolyte may occur. In addition, stability of the battery may be deteriorated in a severe high temperature or low temperature environment.

For example, as in Korean Patent Laid-Open Publication No. 10-2021-0001837, a method of improving battery characteristics by adding an additive to a non-aqueous electrolyte for a rechargeable lithium battery is being researched.

### [Summary of Invention]

### [Problems to be Solved by Invention]

An object of the present disclosure is to provide an electrolyte for a rechargeable lithium battery which provides improved thermal and chemical stabilities.

Another object of the present disclosure is to provide a rechargeable lithium battery which includes the electrolyte for a rechargeable lithium battery and has improved thermal and chemical stabilities.

### [Means for Solving Problems]

An electrolyte for a rechargeable lithium battery according to exemplary embodiments includes: an additive which includes a compound represented by Formula 1 below; an organic solvent; and a lithium salt.

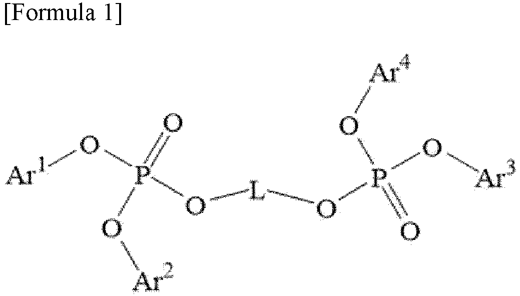

In Formula 1, Ar¹ to Ar⁴ may be the same as or different from each other, and may each independently be a substituted or unsubstituted C₆ to C₁₈ aryl group, and L may be a substituted or unsubstituted C₁ to C₁₂ alkylene group, a substituted or unsubstituted C₃ to C₁₂ cycloalkylene group, a substituted or unsubstituted C₆ to C₁₂ arylene group, or a substituted or unsubstituted C₃ to C₁₂ heteroarylene group.

In one embodiment, the Ar¹ to Ar⁴ may be the same as each other, and may each independently be a substituted or unsubstituted C₆ to C₁₂ aryl group, and L may be a substituted or unsubstituted C₆ to C₁₂ arylene group.

In one embodiment, the Formula 1 may include a compound represented by Formula 2 below:

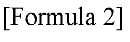

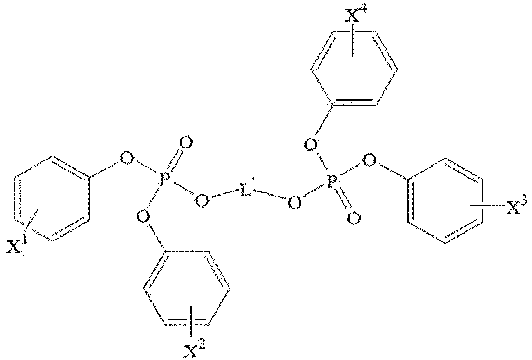

In Formula 2, X¹ to X⁴ may be the same as or different from each other, and may each independently be hydrogen or a halogen group, and L' may be a substituted or unsubstituted C₆ to C₁₂ arylene group, or a substituted or unsubstituted C₃ to C₁₂ heteroarylene group

In one embodiment, the X¹ to X⁴ may be the same as each other, and may each independently be a halogen group, and L' may be a substituted or unsubstituted C₆ to C₁₂ arylene group.

In one embodiment, the additive may be included in an amount of 0.1% by weight to 10% by weight based on a total weight of the electrolyte for a rechargeable lithium battery.

In one embodiment, the additive may be included in an amount of 0.5% by weight to 7% by weight based on the total weight of the electrolyte for a rechargeable lithium battery.

In one embodiment, the electrolyte for a rechargeable lithium battery may further include at least one auxiliary additive selected from the group consisting of a cyclic carbonate compound, a fluorine-substituted cyclic carbonate compound, a sultone compound, a cyclic sulfate compound and a fluorophosphate compound.

In one embodiment, the auxiliary additive may be included in an amount of 0.01% by weight to 10% by weight based on the total weight of the electrolyte.

In one embodiment, the auxiliary additive may be included in an amount of 0.05% by weight to 5% by weight based on the total weight of the electrolyte for a rechargeable lithium battery.

In one embodiment, the organic solvent may include at least one selected from the group consisting of a carbonate organic solvent, an ester organic solvent, an ether organic solvent, a ketone organic solvent and an aprotic organic solvent.

A rechargeable lithium battery according to exemplary embodiments includes: an electrode assembly in which a plurality of cathodes and a plurality of anodes are repeatedly laminated; a case in which the electrode assembly is housed; and the electrolyte for a rechargeable lithium battery according to the above-described embodiments housed in the case together with the electrode assembly.

### [Advantageous effects]

The electrolyte for a rechargeable lithium battery according to the embodiments of the present disclosure may improve battery performance.

For example, an amount of heat generated by the electrolyte for a rechargeable lithium battery may be reduced, thus to improve flame retardant characteristics.

For example, initial characteristics, high-temperature storage and high-temperature lifespan characteristics may be improved, thereby enhancing cell performance.

### [Brief Description of Drawings]

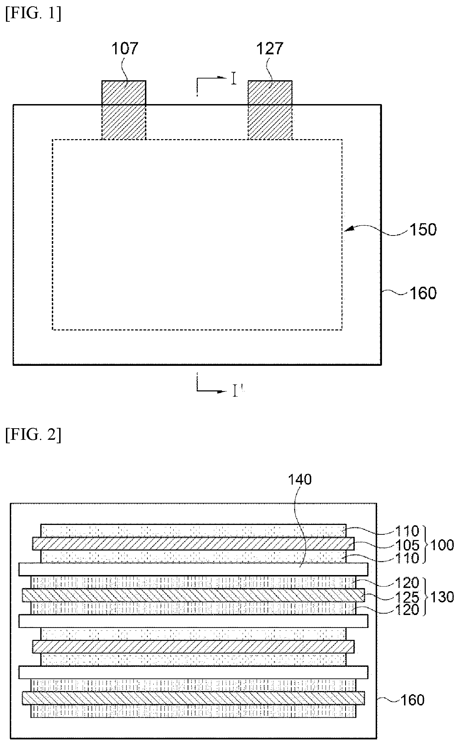

FIGS. 1 and 2 are a schematic plan view and a cross-sectional view of a rechargeable lithium battery according to exemplary embodiments, respectively.

### [Mode for Carrying out Invention]

As used herein, the "~ compound" may refer to a compound including an ~ unit attached to a matrix, etc. of the "~ compound" and a derivative thereof.

As used herein, the "Cₐ-C_{b}" may refer to "the number of carbon (C) atoms of a to b."

### <Electrolyte for a rechargeable lithium battery>

An electrolyte for a rechargeable lithium battery according to exemplary embodiments includes a lithium salt; an organic solvent; and an additive including a compound represented by Formula 1.

Hereinafter, components of the present disclosure will be described in more detail.

### Additive

The electrolyte for a rechargeable lithium battery according to exemplary embodiments includes an additive including a compound represented by Formula 1 below.

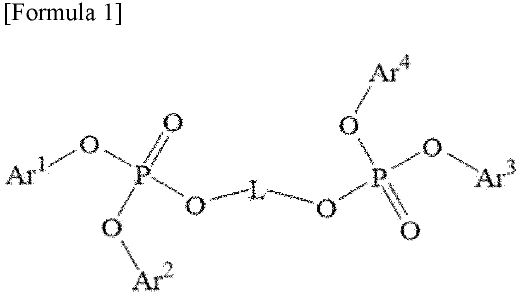

In Formula 1, Ar¹ to Ar⁴ may be independently the same as or different from each other. For example, Ar¹ to Ar⁴ may be a substituted or unsubstituted C₆ to C₁₈ aryl group, and may be a C₆ to C₁₂ aryl group in which a halogen group is substituted, and a C₆ aryl group in which a halogen group is substituted.

For example, L may be a substituted or unsubstituted C₁ to C₁₂ alkylene group, a substituted or unsubstituted C₃ to C₁₂ cycloalkylene group, a substituted or unsubstituted C₆ to C₁₂ arylene group, or a substituted or unsubstituted C₃ to C₁₂ heteroarylene group. In one embodiment, L may be a substituted or unsubstituted C₆ to C₁₂ arylene group.

In one embodiment, the Formula 1 may include a compound represented by Formula 2 below.

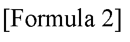

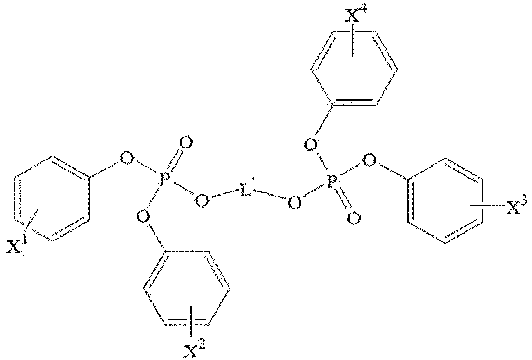

In Formula 2, X¹ to X⁴ may be independently the same as or different from each other. For example, X¹ to X⁴ may be hydrogen or a halogen group, may be a halogen group, and may be a fluorine group.

For example, L' may be a substituted or unsubstituted C₆ to C₁₂ arylene group, or a substituted or unsubstituted C₃ to C₁₂ heteroarylene group, may be a substituted or unsubstituted C₆ to C₁₂ arylene group, and may be a C₆ to C₁₂ arylene group in which a halogen group is substituted.

For example, the aryl group may mean a functional group in which one hydrogen atom is removed from aromatic hydrocarbon. For example, -C₆H₅ may mean a phenyl group.

For example, the alkyl group may mean a moiety composed of carbon and hydrogen in a molecule. The alkyl group may mean a form in which one hydrogen atom is separated from a carbon atom at an end of an alkane (-CₙH₂ₙ-). For example, CH₃-CH₂-CH₂- may mean a propyl group.

For example, the alkylene group may mean a form in which one hydrogen atom is separated from each of carbon atoms at both ends of the alkane (-CₙH₂ₙ-). For example, -CH₂-CH₂-CH₂- may mean a propylene group.

For example, the arylene group may mean a form in which one hydrogen atom is separated from each of carbon atoms at both ends of aromatic hydrocarbon. -C₆H₄- may mean a phenylene group.

For example, the heteroarylene group may mean a form in which one hydrogen atom is separated from each of carbon atoms at both ends of a compound, for instance at least one heteroatom as a ring-forming atom other than the carbon atom. For example, it may be a pyridinyl group, a pyrimidinyl group, a pyrazinyl group, a pyridazinyl group, a triazinyl group, a quinolinyl group, etc.

For example, the meaning of "substituted" may mean that a hydrogen atom of the aryl group, alkylene group, or arylene group is substituted with a substituent, such that the substituent can be further bonded to a carbon atom of the aryl group, alkylene group, or arylene group. For example, the substituent may be at least one of a halogen group, a C₁-C₆ alkyl group, a C₂-C₆ alkenyl group, an amino group, a C₁-C₆ alkoxy group, a C₃-C₇ cycloalkyl group and a 5- to 7-membered heterocycloalkyl group. In some embodiments, the substituent may be a halogen group or a C₁-C₆ alkyl group.

When the electrolyte for a rechargeable battery includes the additive including the compound represented by Formula 1 above, the surface of an electrode may be stably protected, thereby stabilizing an electrode interface to suppress a side reaction with the electrolyte, and improving battery performance, such as a battery capacity, lifespan characteristics and flame retardancy.

In one embodiment, the compound represented by Formula 2 above may include tetra-4-fluoro-phenyl m-phenylene bis(phosphate). For example, the tetra-4-fluoro-phenyl m-phenylene bis(phosphate) may be represented by Formula 2-1 below.

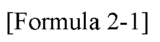

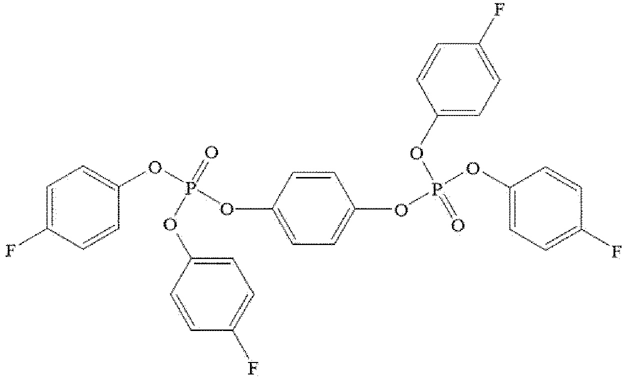

For example, when the electrolyte for a rechargeable battery includes the tetra-4-fluorophenyl m-phenylene bis(phosphate) as an additive, a stable SEI film may be formed on the electrode by a fluorine group, thereby improving the high-temperature storage characteristics and providing a rechargeable lithium battery in which flame retardant characteristics are also enhanced. For example, in the case of tetra-phenyl m-phenylene bis(phosphate) which does not include the fluorine group in a phenyl group, it is difficult to form a stable SEI film on the electrode by the fluorine group, such that there is a limitation in stabilizing the electrode interface. In addition, there is also a limitation in improving the flame retardancy by the fluorine group.

In one embodiment, in consideration of the implementation of sufficient passivation and formation of the stable SEI film, a content of the additive may be adjusted to 0.1% by weight ("wt%") or more, 0.2 wt% or more, 0.3 wt% or more, 0.4 wt% or more, 0.5 wt% or more, or 1 wt% or more based on a total weight of the electrolyte for a rechargeable lithium battery. Further, in consideration of the movement of lithium ions and the activity of an active material in the electrolyte, the content of the additive may be adjusted to 10 wt% or less, 9 wt% or less, 7 wt% or less, 6 wt% or less, 5 wt% or less, 4.5 wt% or less, 4 wt% or less, 3.5 wt% or less, 3 wt% or less, or 2 wt% or less based on the total weight of the electrolyte for a rechargeable lithium battery.

### Auxiliary additive

The electrolyte for a rechargeable lithium battery according to exemplary embodiments may further include an auxiliary additive together with the above-described additive.

In one embodiment, the auxiliary additive may include, for example, a cyclic carbonate compound, a fluorine-substituted carbonate compound, a sultone compound, a cyclic sulfate compound and a fluorophosphate compound.

In one embodiment, a content of the auxiliary additive may be adjusted to, for example, 10 wt% or less, 9 wt% or less, 8 wt% or less, 7 wt% or less, 6 wt% or less, 5 wt% or less, 4 wt% or less, 3 wt% or less, 2 wt% or less, or 1 wt% or less based on a total weight of the non-aqueous electrolyte in consideration of the action with the main additive including the compound represented by Formula 1. In addition, the content of the auxiliary additive may be adjusted to 0.01 wt% or more, 0.02 wt% or more, 0.03 wt% or more, 0.05 wt% or more, 0.1 wt% or more, 0.2 wt% or more, 0.3 wt% or more, 0.4 wt% or more, or 0.5 wt% or more in consideration of the stabilization of the SEI film.

For example, the auxiliary additive may be included in a content of about 0.01 wt% to 10 wt%, 0.05 wt% to 5 wt%, or 0.1 wt% to 5 wt% based on the total weight of the non-aqueous electrolyte. Within the above range, durability of the protective film may be enhanced, and flame retardant performance of the electrolyte may be improved without inhibiting the role of the main additive.

The cyclic carbonate compound may include vinylene carbonate (VC), vinyl ethylene carbonate (VEC) and the like.

The fluorine-substituted cyclic carbonate compound may include fluoroethylene carbonate (FEC).

The sultone compound may include 1,3-propane sultone, 1,3-propene sultone, 1,4-butane sultone and the like.

The cyclic sulfate compound may include 1,2-ethylene sulfate, 1,2-propylene sulfate and the like.

The fluorophosphate compound may include lithium difluorophosphate.

In one embodiment, as the auxiliary additive, the fluorine-substituted cyclic carbonate compound, the sultone compound, the cyclic sulfate compound and the fluorophosphate compound may be used together.

When additionally including the auxiliary additive, durability and stability of the electrode may be further improved. The auxiliary additive may be included in an appropriate content within a range that does not inhibit the movement of lithium ions in the electrolyte.

### Organic solvent and lithium salt

The organic solvent may include, for example, an organic compound which provides sufficient solubility to the lithium salt, the additive and the auxiliary additive, and does not have reactivity within the battery.

In some embodiments, the organic solvent may include at least one selected from the group consisting of a carbonate organic solvent, an ester organic solvent, an ether organic solvent, a propionate organic solvent and a fluorine organic solvent.

In some embodiments, the organic solvent may include a carbonate solvent. For example, the carbonate solvent may include a linear carbonate solvent and a cyclic carbonate solvent. In some embodiments, the organic solvent may include the linear carbonate solvent more than the cyclic carbonate solvent based on a volume. For example, a mixing volume ratio of the linear carbonate solvent and the cyclic carbonate solvent may be 1:1 to 9:1, or 1.5: 1 to 4: 1.

For example, the linear carbonate solvent may include at least one of dimethyl carbonate (DMC), ethyl methyl carbonate (EMC), diethyl carbonate (DEC), methyl propyl carbonate, ethyl propyl carbonate and dipropyl carbonate.

For example, the cyclic carbonate solvent may include at least one of ethylene carbonate (EC), propylene carbonate (PC) and butylene carbonate.

For instance, examples of the ester solvent may include methyl acetate (MA), ethyl acetate (EA), n-propyl acetate (n-PA), 1,1-dimethylethyl acetate (DMEA), methyl propionate (MP), ethyl propionate (EP), γ-butyrolacton (GBL), decanolide, valerolactone, mevalonolactone, caprolactone and the like.

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

Examples of the ketone solvent may include cyclohexanone. Examples of the alcohol solvent may include ethyl alcohol, isopropyl alcohol and the like.

An aprotic solvent may include a nitrile solvent, an amide solvent such as dimethyl formamide (DMF), a dioxolane solvent such as 1,3-dioxolane, a sulfolane solvent and the like.

In one embodiment, the carbonate solvent may be used as the organic solvent. For example, the organic solvent may include ethylene carbonate (EC), ethyl methyl carbonate (EMC), diethyl carbonate (DEC), or a combination thereof.

In one embodiment, the electrolyte may include, for example, a lithium salt. The lithium salt may be expressed as Li⁺X⁻.

For example, the anion (X⁻) of the lithium salt may be F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ and the like. These may be used alone or in combination of two or more lithium salts.

In some embodiments, the lithium salt may include at least one of LiBF₄ and LiPF₆.

In one embodiment, the lithium salt may be included in a concentration of 0.01 to 5 M, and preferably 0.01 to 2 M based on the organic solvent. Within the above concentration range, lithium ions and/or electrons may smoothly move during charging and discharging of the battery.

### <Rechargeable lithium battery>

The exemplary embodiment provides a rechargeable lithium battery including the above-described electrolyte for a rechargeable lithium battery.

The rechargeable lithium battery according to exemplary embodiments includes an electrode assembly in which a plurality of cathodes and a plurality of anodes are repeatedly laminated; a case in which the electrode assembly is housed; and the electrolyte for a rechargeable lithium battery according to the above-described embodiments housed in the case together with the electrode assembly.

FIGS. 1 and 2 are a schematic plan view and a cross-sectional view illustrating a rechargeable lithium battery according to exemplary embodiments, respectively. For example, FIG. 2 is a cross-sectional view taken on line I-I' in FIG. 1.

Referring to FIGS. 1 and 2, the rechargeable lithium battery may include an electrode assembly including a cathode 100, an anode 130 and a separation membrane 140 interposed between the cathode and the anode.

The electrode assembly may be housed in a case 160 together with the electrolyte to be impregnated therein by the electrolyte.

The cathode 100 may include a cathode active material layer 110 formed by applying a cathode active material to a cathode current collector 105. The cathode active material may include a compound capable of reversibly intercalating and deintercalating lithium ions.

In exemplary embodiments, the cathode active material may include a lithium-transition metal oxide. For example, the lithium-transition metal oxide includes nickel (Ni), and may further include at least one of cobalt (Co) and manganese (Mn).

For example, the lithium-transition metal oxide may be represented by Formula 3 below.

[Formula 3] Li₁₊ₐNi_{1-(x+y})CoₓM_{y}O₂

In Formula 3 above, a, x and y may satisfy -0.05≤a≤0.2, 0.01≤x≤0.3, 0.01≤y≤0.3, and M may be one or more elements selected from Mn, Mg, Sr, Ba, B, Al, Si, Ti, Zr and W.

As shown in Formula 3 above, a lithium-transition metal compound may include Ni in the highest content or molar ratio among Ni, Co and M. Ni may actually function as a metal related to output and/or capacity of the rechargeable lithium battery, and as Ni is included in the highest amount among transition metals, it is possible to implement a high capacity, high output rechargeable lithium battery.

In one embodiment, in the Formula 3, x and y may satisfy 0.01≤x≤0.2, 0.01≤y≤0.2. In one embodiment, the molar ratio of Ni may be 0.7 or more, or 0.8 or more.

When the content of Ni in the cathode active material or the lithium-transition metal oxide is increased, relatively chemical stability, for example, high-temperature storage stability of the rechargeable battery may be deteriorated. In addition, due to surface damage of the cathode active material or side reaction with the electrolyte due to the repeated charging/discharging, sufficient high output/high capacity characteristics according to the high content of Ni may not be implemented.

However, as described above, the fluorine additive may be bonded to Ni on the surface of the cathode active material or lithium-transition metal oxide through a coordinate bond or chemical interaction to provide passivation of the cathode active material. Therefore, the high output/high capacity characteristics through the high content of Ni may be substantially and uniformly maintained for a long time even in a high temperature environment.

A slurry may be prepared by mixing and stirring the cathode active material with a binder, a conductive material and/or a dispersant in a solvent. The slurry may be applied to the cathode current collector 105, followed by compressing and drying to prepare the cathode 100.

The cathode current collector 105 may include, for example, stainless steel, nickel, aluminum, titanium, copper or an alloy thereof, and preferably aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a cathode binder. In this case, an amount of the binder for forming the cathode active material layer may be reduced and an amount of the cathode active material or lithium metal oxide particles may be relatively increased. Thereby, the output and capacity of the rechargeable battery may be improved.

The conductive material may be included to facilitate the movement of electrons between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO₃, and LaSrMnO₃, etc.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; a silicon (Si) compound or tin, etc. may be used. Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium or indium, etc.

The silicon compound may include, for example, silicon, silicon oxide or a silicon-carbon composite compound such as silicon carbide (SiC).

For example, a form of slurry may be prepared by mixing the anode active material with a binder, a conductive material, thickener, and the like in a solvent, followed by stirring the same. The slurry may be applied to at least one surface of the anode current collector 125, followed by compressing and drying to prepare the anode 130.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

In some embodiments, the anode 130 may have an area (e.g., a contact area with the separation membrane 140) and/or volume larger than those/that of the cathode 100. Thereby, lithium ions generated from the cathode 100 may smoothly move to the anode 130 without being precipitated in the middle, for example.

According to exemplary embodiments, an electrode cell is defined by the cathode 100, the anode 130 and the separation membrane 140, and a plurality of electrode cells are laminated to form, for example, a jelly roll type electrode assembly 150. For example, the electrode assembly 150 may be formed by winding, lamination, folding, and the like of the separation membrane 140.

The electrode assembly 150 may be housed in the case 160 together with the non-aqueous electrolyte according to the above-described exemplary embodiments to define the rechargeable lithium battery. According to exemplary embodiments, the non-aqueous electrolyte may be used as the electrolyte.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The rechargeable lithium battery may be manufactured, for example, in a cylindrical shape using a can, a square shape, a pouch shape or a coin shape.

Hereinafter, preferable examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

### Synthesis Example

### Synthesis of tetra-4-fluoro-phenyl m-phenylene bis(phosphate)

100 ml of toluene was quantified and put into a 250 ml round bottom flask, then 9.84 g (64.18 mmol) of POCl₃ and 1.71 g (12.84 mmol) of AlCl₃ were quantified and input therein. Thereafter, 14.4 g (128.35 mmol) of 4-fluorophenol was dissolved in 50 ml of toluene, then input therein for 2 hours using a syringe pump. Subsequently, the temperature of a reactor was increased to 100°C, followed by additionally stirring the mixture for 6 hours under a reflux condition. After completion of the reaction, the mixture was filtered to collect the filtrate, and dried in vacuum at room temperature to remove toluene. The concentrated solution was purified through a column with a mixed solution of hexane and ethyl acetate to obtain 11.73 g of an intermediate.

2.12 g (19.26 mmol) of resorcinol and 4.48 g (44.3 mmol) of triethylamine were mixed in 100 ml of THF, then the intermediate obtained above was added dropwise thereto. Then, the mixture was stirred under the reflux condition for 24 hours by increasing the temperature of the reactor to 60°C. After completion of the reaction, THF was removed through filtration and quenching with a 10% NaOH aqueous solution. Finally, the reaction product was purified through a column with a mixed solution of hexane and ethyl acetate to obtain 10.9 g of tetra-4-fluoro-phenyl m-phenylene bis(phosphate).

Tetra-4-fluoro-phenyl m-phenylene bis(phosphate) 1H-NMR chemical shift (500 MHz, Acetone-d6), δ: 7.50-7.54 (m, 2H), 7.35-7.42 (m, 9H), 7.20-7.25 (m, 9H)

### Examples and Comparative Examples

### Example 1

### (1) Preparation of electrolyte

A 1.0M LiPF₆ solution (a mixed solvent of EC/EMC in a volume ratio of 30:70) was prepared. An electrolyte was prepared by inputting 1 wt% of fluoroethylene carbonate (FEC), 0.5 wt% of 1,3-propanesultone (PS), and 0.5 wt% of 1,3-propenesultone (PRS) based on the total weight of the electrolyte into the LiPF₆ solution, and adding 3 wt% of tetra-4-fluoro-phenyl m-phenylene bis(phosphate) according to the synthesis example thereto.

### (2) Manufacture of rechargeable lithium battery sample

A cathode slurry was prepared by mixing Li[Ni_{0.8}Co_{0.1}Mn_{0.1}]O₂ as a cathode active material, carbon black as a conductive material, and a polyvinylidene fluoride (PVdF) as a binder in a weight ratio of 92:5:3. The slurry was uniformly applied to an aluminum foil having a thickness of 15 µm, followed by vacuum drying and pressing the same at 130°C to prepare a cathode for a rechargeable lithium battery.

An anode slurry was prepared by mixing 97 wt% of anode active material in which artificial graphite and natural graphite are mixed in a weight ratio of 7:3, 1 wt% of Super-P as a conductive material, styrene-butadiene rubber (SBR) as a binder, and 2 wt% carboxymethyl cellulose (CMC) as a thickener. The anode slurry was uniformly applied to a copper foil having a thickness of 15 µm, followed by drying and pressing the same to prepare an anode.

The anode slurry was uniformly applied to a region of the copper foil (thickness 15 µm) having a protrusion part (anode tab) on one side except for the protrusion part, followed by drying and pressing the same to prepare an anode.

The cathode and the anode prepared as described above were cut into a predetermined size and laminated, and a separator (polyethylene, thickness 20 µm) was interposed between the cathode and the anode to form an electrode assembly, and then tab parts of the cathode and the anode were welded, respectively.

The electrode assembly was put into a pouch, followed by sealing three sides of the pouch except for an electrolyte injection side. At this time, a portion having the electrode tab was included in the sealing part. After injecting the electrolyte prepared in (1) above through the remaining side except for the sealing part, and the remaining side was also sealed, followed by impregnation for 12 hours or more to manufacture a rechargeable lithium battery sample.

### Example 2

A rechargeable lithium battery sample was manufactured in the same manner as in Example 1, except that the content of tetra-4-fluoro-phenyl m-phenylene bis(phosphate) as the additive was changed to 5 wt% when preparing the electrolyte.

### Example 3

A rechargeable lithium battery sample was manufactured in the same manner as in Example 1, except that the content of tetra-4-fluoro-phenyl m-phenylene bis(phosphate) as the additive was changed to 7 wt% when preparing the electrolyte.

### Example 4

A rechargeable lithium battery sample was manufactured in the same manner as in Example 1, except that ethylene sulfate was added in a content of 1.0 wt% when preparing the electrolyte.

### Example 5

A rechargeable lithium battery sample was manufactured in the same manner as in Example 1, except that lithium difluorophosphate was added in a content of 1.0 wt% when preparing the electrolyte.

### Comparative Example 1

A rechargeable lithium battery sample was manufactured in the same manner as in Example 1, except that tetra-4-fluoro-phenyl m-phenylene bis(phosphate) as the additive was not added when preparing the electrolyte.

### Experimental example

### (1) Measurement of heat exposure (Hot box test)

The rechargeable batteries of the examples and comparative examples were put into an oven, and the temperature thereof was increased at a rate of 5°C/min to reach 150°C. Then, a time (delay time) required for the cell to explode during maintaining the increased temperature for 3 hours was measured.

### (2) Evaluation of initial characteristics

### 2-1) Evaluation of initial capacity

The lithium rechargeable batteries of the examples and comparative examples were charged with 0.5C-rate CC/CV (4.2 V, 0.05C cut-off) at 25°C, and were discharged with 0.5C-rate CC (2.7 V cut-off), then the discharge capacities were measured. This process was conducted 3 times.

### 2-2) Evaluation of direct current internal resistance (DCIR)

For each of the rechargeable batteries of the examples and comparative examples, at 60% point of state-of-charge (SOC), when sequentially increasing or decreasing the C-rate to 0.2C, 0.5C, 1.0C, 1.5C, 2.0C, 2.5C and 3.0C, and performing charging and discharging at the corresponding C-rate for 10 seconds, terminal points of the voltage were composed with an equation of a straight line and a slope thereof was adopted as the DCIR.

### (3) Evaluation of lifespan characteristics at 60°C

### 3-1) Evaluation of capacity retention rate (Ret)

The rechargeable batteries of the examples and comparative examples were discharged with 0.5 C-rate CC (2.7 V cut-off), and discharge capacity was measured, respectively. Then, the capacity retention rate was calculated by measuring the discharge capacity after high temperature storage and converting it into a percentage compared to the initial capacity measured in 2-1) by the following equation.
Capacity retention rate (%) = (Discharge capacity after high temperature storage / Initial capacity) × 100

Evaluation results are shown in Table 1 below.

### 3-2) Evaluation of direct current internal resistance (DCIR)

Internal resistances (D_DCIR) of the rechargeable batteries of the examples and comparative examples were measured in the same manner as in 2-2) above. Evaluation results are shown in Table 1 below.

**[TABLE 1]**

| Rechargeable battery | | Example 1 | Example 2 | Example 3 | Example 4 | Example 5 | Comparat ive Example 1 |
|---|---|---|---|---|---|---|---|
| Heat exposure | Delay time (sec) | 60 | 96 | 114 | Not measured | | 0 |
| Initial characteristi cs | Capacity (mAh) | 1698 | 1676 | 1654 | 1688 | 1690 | 1711 |
| | DCIR (mΩ) | 47 | 47 | 49 | 46 | 45 | 41 |
| High temperature storage (14 weeks) | Capacity retention rate (%) | 85 | 80 | 73 | 87 | 86 | 83 |
| | DCIR increase rate (%) | 111 | 128 | 170 | 110 | 107 | 123 |

Referring to Table 1, it can be confirmed that the lithium rechargeable batteries according to Examples 1 to 3 have improved thermal stability and flame retardant characteristics compared to the rechargeable lithium battery according to Comparative Example 1.

The rechargeable lithium battery according to Example 1, where the content of tetra-4-fluoro-phenyl m-phenylene bis(phosphate) as the additive is lower than that of the lithium rechargeable batteries according to Examples 2 and 3, has a higher capacity retention rate when evaluating the high-temperature storage characteristics and a reduced resistance increase rate compared to the rechargeable lithium battery according to Comparative Example 1.

In addition, the lithium rechargeable batteries according to Examples 4 and 5, where ethylene sulfate or lithium difluorophosphate was separately added as the auxiliary additive, respectively, have a higher capacity retention rate when evaluating the high-temperature storage characteristics and a reduced resistance increase rate, respectively, compared to the rechargeable lithium battery according to Comparative Example 1.

## Claims

1. An electrolyte for a rechargeable lithium battery comprising:
an additive which comprises a compound represented by Formula 1 below;
an organic solvent; and
a lithium salt: 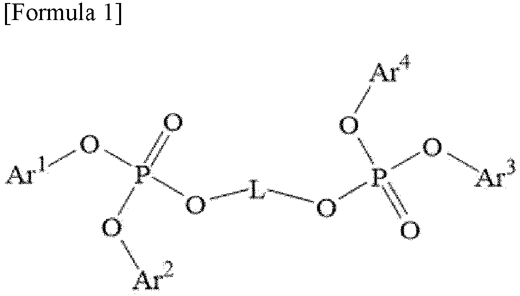
(in Formula 1, Ar¹ to Ar⁴ are the same as or different from each other, and are each independently a substituted or unsubstituted C₆ to C₁₈ aryl group, and L is a substituted or unsubstituted C₁ to C₁₂ alkylene group, a substituted or unsubstituted C₃ to C₁₂ cycloalkylene group, a substituted or unsubstituted C₆ to C₁₂ arylene group, or a substituted or unsubstituted C₃ to C₁₂ heteroarylene group).

2. The electrolyte for a rechargeable lithium battery according to claim 1, wherein the Ar¹ to Ar⁴ are the same as each other, and are each independently a substituted or unsubstituted C₆ to C₁₂ aryl group, and L is a substituted or unsubstituted C₆ to C₁₂ arylene group.

3. The electrolyte for a rechargeable lithium battery according to claims 1 or 2, wherein the Formula 1 comprises a compound represented by Formula 2 below: 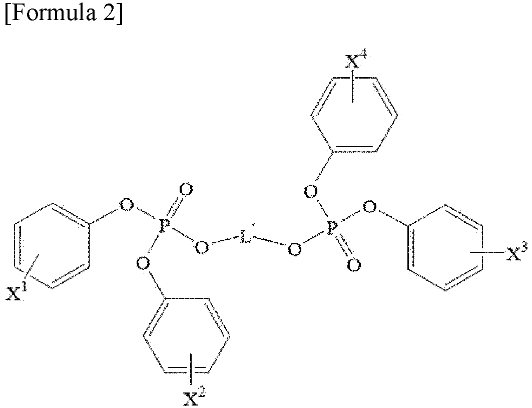 (in Formula 2, X¹ to X⁴ are the same as or different from each other, and are each independently hydrogen or a halogen group, and L' is a substituted or unsubstituted C₆ to C₁₂ arylene group, or a substituted or unsubstituted C₃ to C₁₂ heteroarylene group).

4. The electrolyte for a rechargeable lithium battery according to claim 3, wherein the X¹ to X⁴ are the same as each other, and are each independently a halogen group, and L' is a substituted or unsubstituted C₆ to C₁₂ arylene group.

5. The electrolyte for a rechargeable lithium battery according to any one of claims 1 to 4, wherein the additive is included in an amount of 0.1% by weight to 10% by weight based on a total weight of the electrolyte for a rechargeable lithium battery.

6. The electrolyte for a rechargeable lithium battery according to any one of claims 1 to 5, wherein the additive is included in an amount of 0.5% by weight to 7% by weight based on the total weight of the electrolyte for a rechargeable lithium battery.

7. The electrolyte for a rechargeable lithium battery according to any one of claims 1 to 6, wherein the electrolyte for a rechargeable lithium battery further comprise at least one auxiliary additive selected from the group consisting of a cyclic carbonate compound, a fluorine-substituted cyclic carbonate compound, a sultone compound, a cyclic sulfate compound and a fluorophosphate compound.

8. The electrolyte for a rechargeable lithium battery according to claim 7, wherein the auxiliary additive is included in an amount of 0.01% by weight to 10% by weight based on the total weight of the electrolyte.

9. The electrolyte for a rechargeable lithium battery according to claim 8, wherein the auxiliary additive is included in an amount of 0.05% by weight to 5% by weight based on the total weight of the electrolyte for a rechargeable lithium battery.

10. The electrolyte for a rechargeable lithium battery according to any one of claims 1 to 9, wherein the organic solvent comprises at least one selected from the group consisting of a carbonate organic solvent, an ester organic solvent, an ether organic solvent, a ketone organic solvent and an aprotic organic solvent.

11. A rechargeable lithium battery comprising:
an electrode assembly in which a plurality of cathodes and a plurality of anodes are repeatedly laminated;
a case in which the electrode assembly is housed; and
the electrolyte for a rechargeable lithium battery according to any one of claims 1 to 10 housed in the case together with the electrode assembly.
